# EUROPEAN PATENT APPLICATION

(11) **EP 1 113 206 A2**
(43) Date of publication of application: **04.07.2001**
(21) Application number: 00308847.3
(22) Date of filing: 06.10.2000
(51) Int. Cl.: F16K 35/10

(54) **Shutoff valve lockout device**

(30) Priority: 06.10.1999 US 414085
(71) Applicant: Applied Materials, Inc., Santa Clara, California 95054 (US)
(72) Inventor: Ngo, Tony, San Jose, CA 95148 (US); Morrison, Alan F., San Jose, CA 95124 (US)
(74) Representative: Bayliss, Geoffrey Cyril

(57) **Abstract**

A lockout device (100) for one or more valves, designed to be mounted around one or more valve actuators in a manner that denies movement of or access to the valve actuators. The device comprises a housing (102) and a cover (110) which, in the lockout position, mate around the valve actuators (105) and cannot be removed from the valve actuators.

## Description

The present invention relates to the field of shut off valve lockout devices for mechanical flow valves, and more specifically to a method and structure for mechanically restraining the valve actuators from movement or for denying access to the valve actuators which control flow through the valves.

Today's safety environment routinely requires a means to lockout the operating mechanism of a valve so that the flow setting of the valve cannot easily be changed. Currently, there are a variety of devices in the market place which attach to the valve and provide a means to lockout a single valve. What is available is a device that must be attached to the valve in a way that usually requires some disassembly of the valve. These devices function by preventing a change in the valve setting of on or off (flow or no flow, open or closed) through the addition of a locking feature which fixes, through a physical connection such as a mechanical link, the moveable to the nonmoveable portion of the valve thereby preventing relative movement. These locking features may be in the form of a pin, bolt, tab, flange, ring, or collar. The device is completed with the addition of a locking mechanism to prevent removal of the locking feature. A typical approach might be to add features to the valve; one to the moveable portion and a second feature to the nonmoveable portion of the valve, the features each having a hole (slot or some similar feature) through which a locking mechanism can be engaged thus restricting movement of the two features relative to each other, thereby locking the valve in a position.

To install, these valve lockout devices generally require, in varying degrees, some disassembly or modification of each valve to be locked out. These devices require a separate lockout device for each valve and a separate locking mechanism for each valve for the lockout to function. With today's more complex equipment, there is a need for a simple way to quickly and reliably lockout one or a series of valves easily with a device having minimal intrusion to the valve assemblies.

In the present invention is described a lockout device having a novel approach to restricting operation of one or more valves and its method of use. According to the present invention, a housing is formed of a shape to fit over and around one or a plurality of valve handles. The housing surface has slots in which are placed valve handle stems. A cover is shaped to mate with the housing. The cover and housing form an assembly and when the assembly is properly installed on a set of valve handles, the lockout device cannot be removed from the valve handles. The lockout device functions by denying access to the valve handles and the valves are effectively locked in a position.

The following is a description of some specific embodiments of the invention, reference being made to the accompanying drawings, in which:
**Figure 1** is a three-dimensional illustration of a gas flow control system having a plurality of valves and valve handles.
**Figure 2** is a two-dimensional view of figure 1.
**Figure 3** is a three-dimensional illustration of the present invention.
**Figure 4** is a three-dimensional illustration of a valve handle installed within a housing.
**Figure 5a** is an illustration of a housing/cover assembly which cannot properly close due to interference from some valve handles with settings in the on position.
**Figure 5b** is an illustration of a housing/cover assembly which is properly closed due to non-interference from valve handles all set in the off position.
**Figure 6** is a three-dimensional wireframe illustration of a housing.
**Figure 7** is a three-dimensional wireframe illustration of a cover.
**Figure 8** is an illustration of the present invention installed onto a set often valve handles.
**Figure 9** is an illustration of a lockout device which restrains the valve handles with a housing having a contour that matches valve handle shape and spacing.
**Figure 10** is a three-dimensional illustration of a gas flow control system which has the housing integral to a panel and within which are positioned the valve handles.

A novel device lockout structure for preventing actuation of a plurality of valves is described. In the following description numerous details are set forth such as specific materials in order to provide a thorough understanding of the present invention. In other instances well-known valve designs and functions have not been set forth in detail so that the present invention is clearly described.

The present invention is a novel device structure and method for preventing actuation of flow control valves. A lockout device functions by placing a structure around a set of valve handles or actuators to be locked out. An actuator is a device which moves to block or allow flow through a valve and for the purposes of this invention, a valve handle is used as illustration of such an actuator. Once in place, the lockout device physically denies access to the valve handles, and thus the valve flow settings cannot be changed.

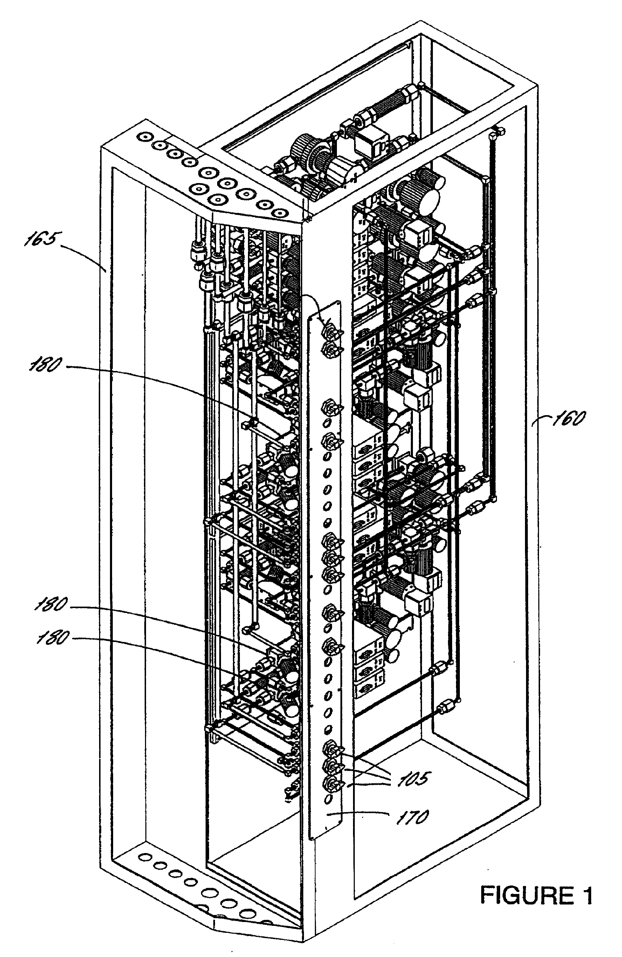

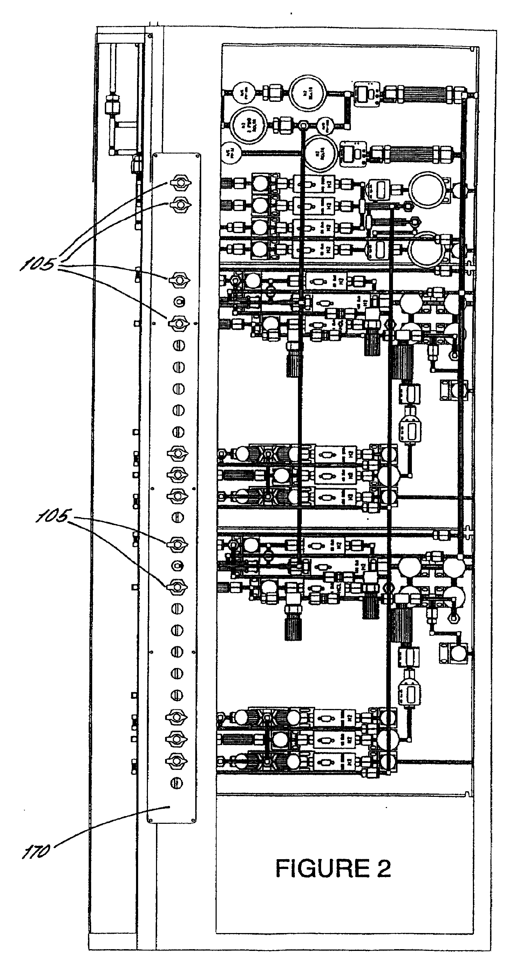

A gas flow control system such as used in a 300mm Epi mainframe by Applied Materials in Sunnyvale, CA is shown in Figures 1 and 2. Such a system is used to control various gases flowing into a process chamber that will fabricate semiconductor wafers. The 300mm Epi system gas flow control system is comprised of a main gas platter that provides the means for delivery and control of hydrogen and nitrogen to the system. A process module gas platter provides the means for delivery and control of silicon source and etch gases. In line to the gas flow are filters, mass flow controllers, and regulators all connected by steel tubing and attached to a mainframe for structural support. Both the process module gas platter and the main gas platter have shut-off valves 180 which are manually operated by valve handles 105. These valve handles 105 are linearly positioned on a panel 170 located at a mainframe 165 edge. Gas lines run from the gas panel down the mainframe 165 and are routed to a gas manifold at the process chamber. The 300mm Epi system gas flow control system provides the necessary environment of controlled pressure and gas flows to ensure uniformity among wafers and as such, this gas flow control system provides a good application for the present invention.

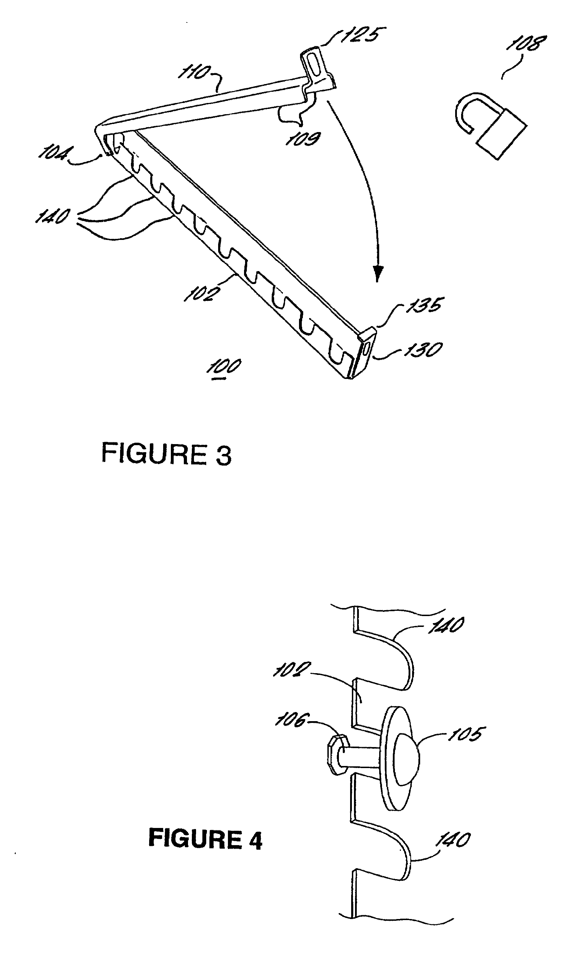

Shown in Figure 3 is a first embodiment of a lockout device 100 of the present invention. Lockout device 100 comprises a housing 102 and a cover 110 which constitute a housing/cover assembly 102/110, the housing/cover assembly 102/110 being pivotally attached 104/107 at one end with a pin. When the valve handles 105 to be locked out are in a closed position, the housing/cover assembly 102/110 is pivoted closed with the valve handles 105 contained within the housing/cover assembly 102/110. The housing/cover assembly 102/110 has a feature that snaps shut to provide confirmation that the housing/cover assembly 102/110 is properly closed. Once the housing/cover assembly 102/110 is installed on the valve handles 105, access to the valve handles 105 is effectively denied.

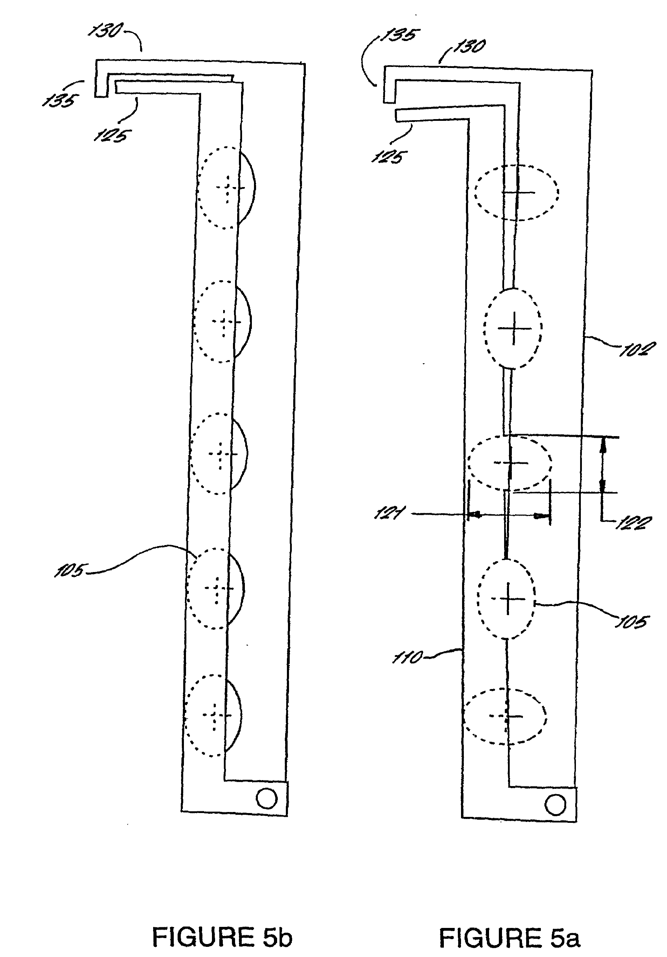

As shown in figure 4, to install the lockout device 100, slots 140 in the housing are inserted around the valve stems 106 of the closed valves 180 with the valve handles 105 positioned inside the housing 102. Referring now to figure 5a, it can be seen that the valve handles 105 have a long 121 and a short 122 dimension such as an oval shape. If any of the valve handles 105 remain in the on position, the on positioned handles 105 will mechanically interfere with installation of the lockout device 100. With such interference, the housing/cover assembly 102/110 will not close properly. When all the valve handles are in the off position, as shown in figure 5b, the housing/cover assembly 102/110 can close and a tab snap fit-interference feature will engage.

Shown in figures 5a & b, the housing/cover assembly 102/110 is pivotally attached at one end to allow movement, in one plane, of the housing 102 relative to the cover 110. At the other end of the assembly is placed a tab 125 on the cover 110 and a tab 130 on the housing 102. The two tabs 125, 130 are located such that, upon closing the cover 110 to the housing 102 for lockout operation, both tabs 125, 130 are adjacent to each other. In addition, the housing tab 130 has a lip 135 that when mated with the cover tab 125 for lockout operation, protrudes over the free end of the cover tab 125 thus providing a clear visual indication of proper lockout. The housing tab lip 135 is designed to slightly interfere with the mating cover tab 125 during closure of the housing/cover assembly 102/110 so as to provide a "snap-fit" when the cover 110 and housing 100 are closed and functioning properly. To accomplish this snap-fit, a slight bending of the tabs 125, 135 will be required during the closing operation of the housing/cover assembly 102/110 until the lip 135 clears the end of the tab 125 and snaps back into place over the end of the tab 125.

Returning to figure 4, when installing the lockout device, the open end of the housing slots 140 provide access for the valve handles 105 to the inside of the housing 102. The housing 102 and cover are 110 formed by bending metal sheet stock having a thickness of 0.09" which will provide the necessary integrity of the lockout device and still allow the back surface of the housing 102 to fit between the valve handles 105 and the panel surface 170 (figures 1 & 2). The slot widths are 0.718" which is sufficient to fit around a series of valve handle stems 106. The slot width dimension is less than the valve handle dimension opposing it such that the valve handles 105 cannot pass through the slots.

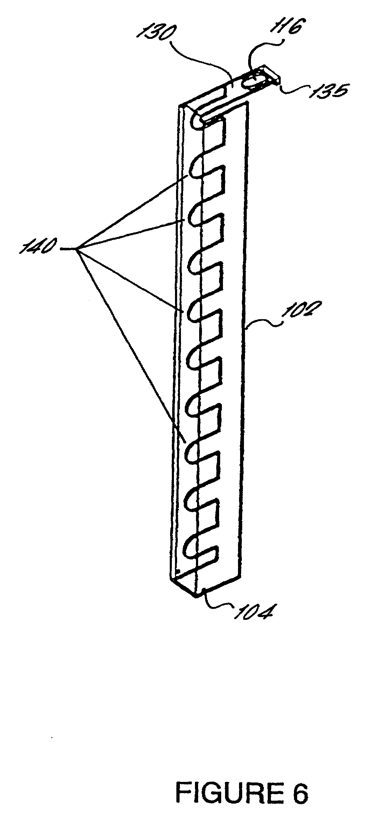

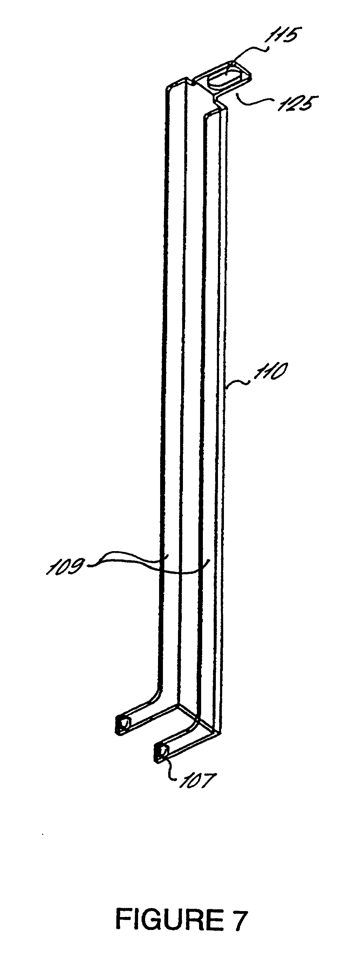

Turning now to figure 6, the housing 102 can be fabricated with a height of 1.50", a depth of 0.86", and a length of 15.94" which is sufficient to encompass a set often valve handles 105 to be locked out of the gas flow control system. The housing 102 has a set often slots 140 that are open at one end and have a full radius at the other end. In the preferred embodiment, the slots 140 are appropriately spaced with 1.60" centers and a depth from the housing edge to the slot radius center point of 0. 75" so as to mate with up to ten valve handles 105 and valve stems 106. The housing 102 has a set of holes 104 for pivotally attaching to the cover 110. As shown in figure 7, the cover has a set of holes 107 for pivotally attaching to the housing. The 104/107 holes, when aligned, are pinned (not shown) to complete the pivot feature. The cover 110 has edges 109 that will be positioned outside of the housing 102 when the housing/cover assembly 102/110 is closed.

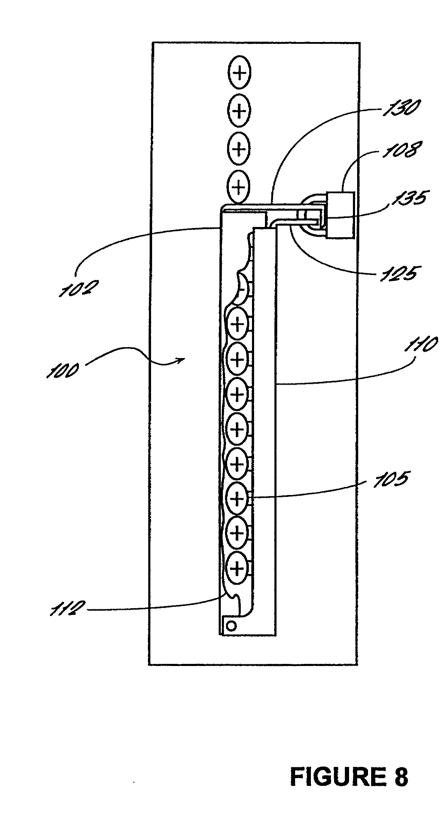

For this embodiment, figure 8 provides, with the aid of a cutout view 112 in the housing 102, an illustration of a properly closed condition wherein the housing/cover assembly 102/110 is closed around the valve handles 105, the housing lip 135 is snapped in place over the cover tab 125, the valve handles 105 are all set in the off position, the lockout device 100 cannot be removed from the valve handles 105 without unsnapping or releasing the tabs 125/130, and access to the valve handles 105 is denied.

For this embodiment, when locking out valves 180, the lockout device 100 is positioned to surround or enclose the valve handles 105 with a cage like structure (housing/cover assembly 102/110) to deny access to the valve handles. The lockout device 100 does not require a rigid, fixed, or hard link to any part of the valve actuation mechanism such as the valve handles 105 or valve stems 106 in order to function.

In another embodiment, a lockout device is designed to lockout a single valve 180 (figures 1 & 2). In this embodiment, a single valve lockout device is designed to restrict access to one valve handle 105. This lockout device could use the "contour" shape design or the "deny access" design. A problem is that the lockout device could turn freely thus allowing the valve handle to be turned. To stop this movement ,when the lockout device is installed, the lockout device may have to be restrained from turning. Such restraint could be accomplished by placing a second lockout device next to the first lockout device. In this way, a side of each device, adjacent to the other device, restricts movement of each lockout device or, alternatively, a feature such as a slot or tab on the valve support structure 160, 165, or 170 could function to restrict lockout device rotation.

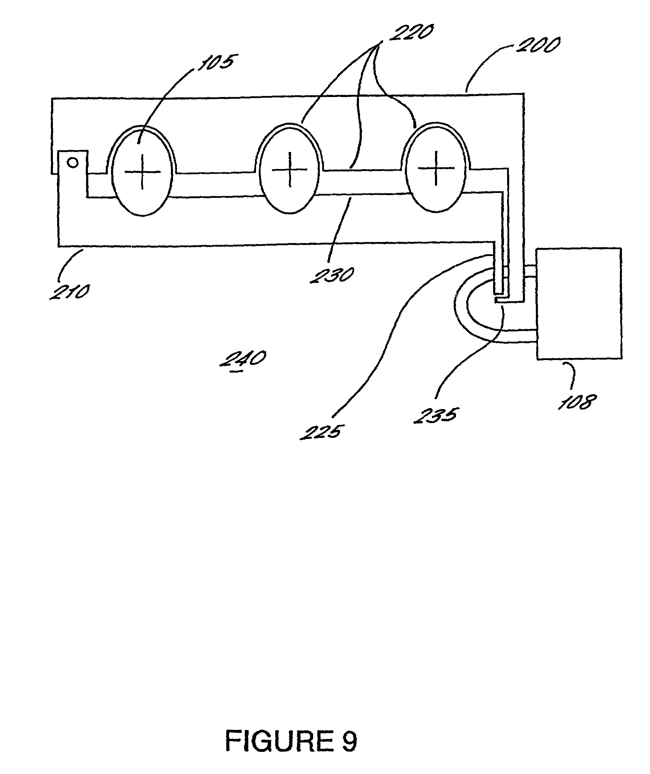

Another embodiment of the present invention is shown in figure 9, wherein a housing 200 and a cover 210 are fixedly attached by a pivot at one end providing a housing/cover assembly 200/210. The housing/cover assembly 200/210 functions by pivoting the housing 200 relative to the cover 210 so as to enclose a set of valve handles 105 to be locked out within the housing/cover assembly 200/210. The housing 200 provides a shape having a contour 220 that matches or follows those of the valve handles 105 and a spacing between the valve handles 105 to be enclosed. The cover 210 provides a surface 230 that is positioned behind the valve handles 105 when the housing/cover 200/210 is installed. When the housing 200 and cover 210 of this embodiment are in a properly closed position, the housing contour 220 rests against the valve handles 105, and the cover surface 230 is behind the valve handles 105, and the tab snap-fit feature is in operation. For this embodiment, behind refers to the side of the valve handle 105 that receives the spindle 106 (as previously shown is figure 4). In this manner the lockout device 240 provides a mechanical restraint to the valve handles 105 such that the valve handles 105 cannot be moved and the lockout device 240 cannot be removed while in the properly closed position. It would be expected, but not required, that the contour 220 would be shaped to fit valve handles 105 that were all in a closed position. However, it should be appreciated that such a contour 220 could be designed to accommodate any combination of on, partial on, or off valve handle positions 105.

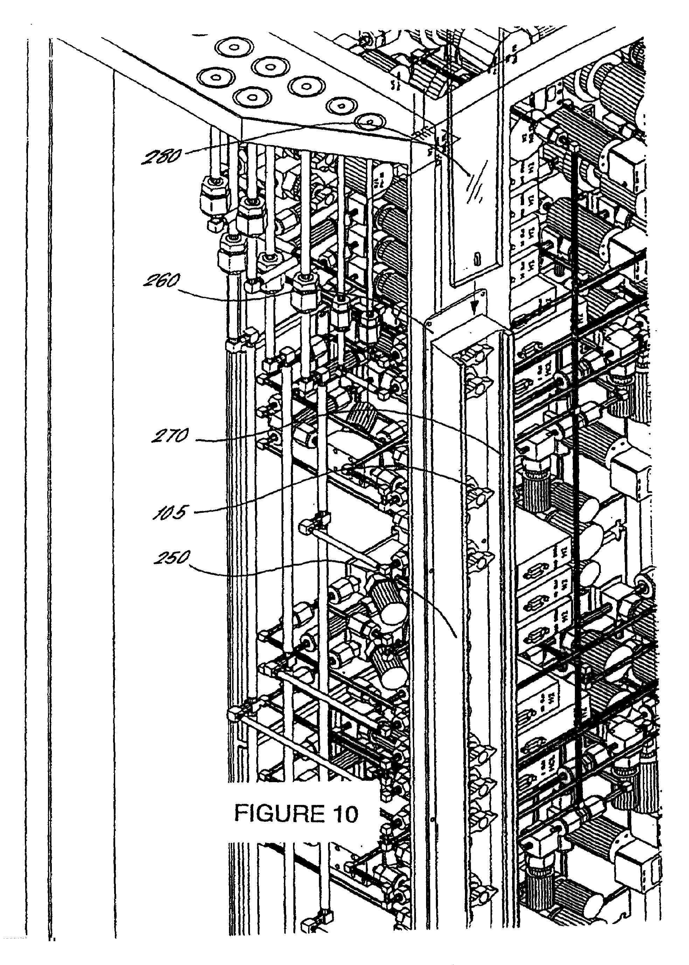

In yet another embodiment as shown in figure 10, a housing 250 is integral or fixedly attached to a panel 260 on which is situated the valve handles 105, and/or the valve stems 106 (as previously shown in figure 4). The valve handles 105 are located within the housing 250. The housing 250 provides an open face for access to the valve handles 105 during normal operation of the valves 180. A method of sealing off this open face is provided with the addition of a clear cover 280 that mates to the housing 250. Such a mating is accomplished by sliding the cover 280 into grooves 270 which are positioned on the inside of the housing 250. In this manner, the lockout device will deny physical access to the valve handles 105 yet provide visual access to confirm the position of the valve handles 105 locked out.

Using a lockout device of the present invention, a single or a series of valves handles, can be locked out such that the valve flow settings cannot be changed. It is possible with the present invention to lock out a series of valve handles aligned in a row. It is possible for the present invention to be designed to lockout a single valve handle. It is also possible for the present invention to be designed to lockout a plurality of valve handles which are not in a row but are staggered or placed in some non-symmetric pattern. It is also a feature of the present invention to make the lockout device integral to a structure providing support for the valves, the valve handles, or the valve stems. It is also possible to lock out a plurality of valves through the use of a plurality of lockout devices that can be added or "stacked" until the desired coverage of locked out valves is accomplished.

The first embodiment was designed to meet a safety purpose that the lockout device only function when all valves locked out were in a closed position and that the lockout device not block or lockout access to any valves which were open. In another embodiment this design criterion may not be observed, in that lockout for any combination of a number of valves open and a number of valves closed may be desired.

For the above embodiments, the housings are formed from steel and then painted, the covers are also formed from steel and painted with the exception of the integral housing embodiment where the cover would be made of a clear material. However, the invention may be constructed of a variety of materials sufficient to maintain the desired integrity of the lockout device. The housing and the cover could be constructed from materials including; cast, woven, or a formed metal such as steel, stainless steel, and aluminum or from a range of plastics including both thermosets and thermoplastics and further including reinforced plastics and glass.

For the above mentioned embodiments, after the housing/cover is closed, the housing/cover assembly may be locked in place providing further assurance that the lockout device cannot be removed from the valve handles 105 locked out. The locking mechanism could be a lock 108 (figures 3 & 9) that could attach through holes in both the housing and the cover tabs (such as shown in tabs 130/125 of figure 3). Alternatively, the locking mechanism could include other forms of restraining devices such as; wires, malleable metal foil, plastic loops or ties, tape, and the like that attaches to, through, or interferes with the housing and/or cover movement or a feature thereon, thereby locking the housing/cover assembly in place around the valves to be locked out.

In the above described embodiments of the present invention there is referred to a "properly closed position" for the lockout device. This term refers to the intended position of the housing, the cover, and the valve handles to be locked out, when the lockout device is installed to function as designed.

## Claims

1. A lockout device for valves, which comprises:
a housing which fits over a plurality of valve handles; and
a cover adapted to mate to the housing and create an assembly; such that when the cover mates with the housing, and is properly closed around the valve handles, the lockout device is constrained around the valve handles and access to the valve handles is denied.

2. A lockout device as claimed in claim 1, wherein:
the cover and the housing are pivotally coupled at one end.

3. A lockout device as claimed in claim 1 or claim 2, wherein,
the cover and the housing are fixedly attached to a pivot at one end.

4. A lockout device as claimed in any of claims 1 to 3, further comprising:
a locking mechanism.

5. A lockout device as claimed in any of claims 1 to 4, further comprising:
a surface feature to visually determine the housing and the cover are properly engaged to deny access to the valve handles.

6. A lockout device as claimed in claim 5, further comprising:
the surface feature is markings.

7. A lockout device as claimed in claim 5, further comprising:
the surface feature is projections on the lockout device.

8. A lockout device as claimed in any of claims 5 to 7, in which:
the housing and the cover are designed to close sufficiently to allow the surface feature to line up indicating proper closure only when all the valve handles to be locked out are in an off position.

9. A lockout device as claimed in claim 8, in which:
the feature involves holes to receive a locking mechanism.

10. A lockout device as claimed in any of claims 1 to 9, further comprising:
a snap-fit feature to mechanically constrain housing movement relative to the cover.

11. A lockout device as claimed in claim 10, further comprising:
the housing and the cover are designed to close sufficiently to allow the snap-fit feature to engage only when all the valve handles to be locked out are in a particular position.

12. A lockout device as claimed in claim 11, in which:
the particular position is an off position.

13. A lockout device for valves, which comprises:
a housing which fits over a plurality of valve handles;
a cover adapted to fit to the housing, wherein the housing and the cover form an assembly and have a properly closed position; wherein when the assembly is properly closed, the valve handles are within the assembly, the valve handles are set to off, access to the valve handles is denied; and
a locking mechanism operably interconnected between the housing and the cover to lock the housing and the cover in place around the valve handles such that the assembly cannot be removed from the valve handles.

14. A lockout device as claimed in claim 13, further comprising:
the locking mechanism is structurally integral to the lockout device.

15. A lockout device as claimed in claim 13, further comprising:
the locking mechanism is structurally integral to a valve support structure.

16. A lockout device for valves, which comprises:
a housing which fits over a plurality of valve handles;
a cover adapted to mate with the housing; wherein the cover and the housing are pivotally attached at one end;
the housing and the cover to have a properly closed position, wherein when the housing and the cover are properly closed around the valve handles, access to the valve handles is denied and the valve handles are in a closed position; and
a lock mechanism operably interconnected between the housing and the cover for locking the housing and the cover in the properly closed position.

17. A lockout device for valves, which comprises:
a housing shaped to fit around a contour and a spacing of a plurality of valve handles;
a cover adapted to mate to the housing such that when mated to the housing and properly closed, the plurality of valve handles are mechanically restrained in a position; and
a feature on the system to receive a locking mechanism; such that when the cover and the housing are properly closed around the valve handles, and the locking mechanism is engaged, the lockout device cannot be removed from the valve handles.

18. A lockout device as claimed in claim 17, wherein the valves are in an off position.

19. A lockout device for one or more valves, which comprises:
a housing fixedly attached to a support structure wherein are placed one or more valve handles; and
a cover adapted to mate to the housing such that when mated to the housing in a properly closed position, the one or more valve handles are enclosed within the housing and cover and access to the valve handles is denied.

20. A lockout device as claimed in claim 19 further comprising;
a lock mechanism operably interconnected between the housing and the cover for locking the housing and the cover in the properly closed position.
